# EUROPÄISCHE PATENTANMELDUNG

(11) **EP 0 567 667 A1**
(43) Veröffentlichungstag der Anmeldung: **03.11.1993**
(21) Anmeldenummer: 92107114.8
(22) Anmeldetag: 25.04.1992
(51) Int. Cl.: F16L 9/12, F16L 9/133

(54) **Extrudiertes Kunststoff-Metall-Verbundrohr für Installationen**

(71) Anmelder: Rosenberg, Gerhard, D-57439 Attendorn (DE)
(72) Erfinder: Rosenberg, Gerhard, D-57439 Attendorn (DE)
(74) Vertreter: Pürckhauer, Rolf, Dipl.-Ing.

(57) **Zusammenfassung**

Das extrudierte Kunststoff-Metall-Verbundrohr (1) für Installationen weist eine Verstärkungsschicht (4) aus Metall, z.B. Aluminiumfolie, zwischen einem Kunststoff-Innenrohr (2) und einer Kunststoff-Außenschicht (3) auf. Das Innenrohr (2), die Verstärkungsschicht (4) und die Außenschicht (3) haben eine Gesamt-Wandstärke, die geringer ist als die eines Rohres aus gleichem Kunststoff ohne Verstärkungsschicht, wobei die Wandstärke der Kunststoff-Außenschicht (3) etwa ein Viertel der Gesamt-Wandstärke ausmacht. Die Verstärkungsschicht (4) weist eine Perforation (6) auf, wobei die Löcher (7) der Perforation (6) zum Herstellen einer Verbindung zwischen Innenrohr (2) und Außenschicht (3) im Bereich der Löcher (7) der Perforation (6) dienen und einen Wasserstau im hygroskopischen Kunststoff des Innenrohres (2) an der metallischen Verstärkungsschicht (4) verhindern.

## Beschreibung

Die Erfindung bezieht sich auf ein extrudiertes Kunststoff-Metall-Verbundrohr für Installationen, das eine Verstärkungsschicht zwischen einem Kunststoff-Innenrohr und einer Kunststoff-Außenschicht aufweist.

Ein solches Verbundrohr ist beispielsweise aus der DE 36 36 737 A 1 bekannt. Bei diesem bekannten extrudierten Kunststoffrohr ist eine relativ dünne elektrisch leitende Schicht aus einer Aluminiumfolie auf das eigentliche, den Nenndruckwerten entsprechende Kunststoffrohr mit Längsüberlappung aufgebracht, wobei eine dünne Kunststoff-Außenhaut als Dielektrikum aufextrudiert ist.

Wenn solche Kunststoffrohre mit Fittings bzw. Formteilen fusionsverschweißt werden, wird das jeweils zu verschweißende Ende des Kunststoffrohres bis unter die Aluminiumfolie abgeschält, und es werden dieses Rohrende und das Formteil, z.B. Verbindungsmuffe, Winkelstück o.dgl., bis zum Fließen des Kunststoffes mit entsprechend beheizten Werkzeugen erhitzt, dann von den Werkzeugen getrennt und ineinander geschoben. Will man nun mit geringerer Wandstärke ein gleichbelastbares Verbindungsrohr schaffen, so kann es bei der bisherigen Schäl- und Schweißtechnik vorkommen, daß sich vor dem eingeschobenen Ende des Kunststoffrohres trotz mitgeschobener Kunststoffmasse ein Radialspalt bildet, so daß bei Druck- bzw. thermischer Belastung des Kunststoff-Rohrsystems, wenn dieses beispielsweise Wasser unter Druck fördert, dieses Medium zwischen Aluminiumfolie und Kunststoff eindringt und das Rohr zum Platzen bringt. Auch würde der Kontakt der Aluminiumfolie mit dem Fördermedium, zur Oxidation bzw. Korrosion der Aluminiumfolie führen.

Ein weiteres dieser Verbundrohre ist beispielsweise in einer älteren Anmeldung (EP 90121699.4) beschrieben. Dieses extrudierte Kunststoffrohr ersetzt bei geringerer Wandstärke Rohre einer höheren Druckstufe und vermeidet durch eine verbesserte Schweißtechnik die Bildung eines Radialspaltes zwischen dem Rohrende und einem Formteil, z.B. Verbindungsmuffe, Winkelstück o.dgl., so daß bei Druck bzw. thermischer Belastung des Kunststoff-Rohrsystems, wenn dieses beispielsweise Wasser unter Druck fördert, dieses Medium nicht zwischen Aluminiumfolie und Kunststoff eindringt und das Rohr zum Platzen bringt.

Wenn bei der Herstellung solcher Kunststoffrohre während des Extrudierens beim Erhitzen nicht mit exakten Temperaturen an den richtigen Stellen gearbeitet wird, erreicht man keine optimale Haftung zwischen Verstärkungsschicht, Innenrohr und Außenschicht, und zwar trotz Verwendung eines Haftvermittlers.

Untersuchungen haben ergeben, daß Kunststoffe bei bestimmten Temperaturen Wasser aufnehmen, d.h. hygroskopisch sind. Wenn beispielsweise im Kunststoff-Innenrohr ein Druck von 10 bar herrscht, ist der Druck an der Kunststoff-Außenschicht infolge der Sperrung durch die Verstärkungsschicht 0 bar, wobei das Wasser in das Kunststoff-Innenrohr eindringt, von der Verstärkungsschicht aufgehalten wird und sich hinter dieser staut. Durch den Kontakt der Verstärkungsschicht aus Aluminium mit dem Wasser oxidiert bzw. korrodiert die Aluminiumfolie und führt anschließend an der Kunststoff-Außenschicht zur Blasenbildung. Diese Wasseraufnahme bzw. dieser Wasserstau im Kunststoffrohr führt auch zu einer Nichtschweißbarkeit des Materials.

Der Erfindung liegt die Aufgabe zugrunde, das gattungsgemäße Kunststoffrohr so weiterzuentwickeln, daß die Haftung zwischen Verstärkungsschicht, Innenrohr und Außenschicht optimiert und ein Druckausgleich zwischen Innenrohr und Außenschicht geschaffen wird.

Diese Aufgabe wird erfindungsgemäß dadurch gelöst, daß die Verstärkungsschicht eine Perforation aufweist.

Zweckmäßig besteht die Verstärkungsschicht aus Aluminium.

Ferner bestehen das Kunststoff-Innenrohr und die Kunststoff-Außenschicht aus dem gleichen Kunststoff, z.B. aus einem PP-Random-Copolymerisat nach Typ 3 DIN 8078. Es können auch verschiedene Kunststoffe verwendet werden.

Das Innenrohr, die Verstärkungsschicht und die Außenschicht können eine Gesamt-Wandstärke haben, die geringer ist als die eines Rohres aus gleichem Kunststoff ohne Verstärkungsschicht, wobei ferner die Wandstärke der Kunststoff-Außenschicht etwa ein Viertel der Gesamt-Wandstärke ausmacht.

Die Verstärkungsschicht weist beidseitig eine als Haftvermittler dienende Kunststoffkaschierung und/oder eine aufgerauhte Oberfläche auf.

Diese Ausbildung der Verstärkungsschicht ermöglicht eine optimale Haftung zwischen der Verstärkungsschicht und dem Innenrohr bzw. der Außenschicht, da einerseits beim Extrudieren eine Verbindung zwischen Innenrohr und Außenschicht im Bereich der Löcher der Perforation entsteht und andererseits bei Gebrauch ein Druckausgleich zwischen Innenrohr und Außenschicht, so daß das vom Kunststoff des Innenrohres aufgenommene Wasser durch die Löcher der Perforation der Verstärkungsschicht über die Außenschicht entweichen kann und somit eine Schweißbarkeit des Verbundrohres gewährleistet ist.

Die gesamte Ausbildung des Verbundrohres ermöglicht auch ein verbessertes Verfahren zum Polyfusions-Verschweißen des Kunststoff-Metall-Verbundrohres mit Fittings bzw. Formteilen, so daß die oben geschilderten Nachteile nicht mehr auftreten, wobei das zu verbindende Rohrende im Durchmesser bis auf ein geringes Übermaß zur Bohrung des Fittings bzw. Formteils mit einem Schälwerkzeug abgeschält wird, woraufhin das Rohrende und das Formteil durch Polyfusionsschweißung miteinander verbunden werden. Nach dem erfindungsgemäßen Verfahren ist dabei vorgesehen, daß vor dem Polyfusionsschweißen das Kunststoff-Metall-Verbundrohr vom Ende her auf einer Länge von nur etwa 5 mm im Durchmesser bis unter die Verstärkungsschicht abgeschält wird, wobei eine kegelstumpfartige Übergangsfläche oder abgestufte zylinderförmige Übergangsfläche bis zum Außendurchmesser der Außenschicht gebildet wird.

Ein besonderer Vorteil des erfindungsgemäßen Kunststoff-Metall-Verbundrohres ist darin zu sehen, daß es mit geringerer Wandstärke größere Druckrohrstufen abdecken kann, d.h. man kann nunmehr die Druckbelastung z.B. eines Rohres der Rohrreihe 7 (PN 25 = Belastbarkeit bis 25 bar Kaltwasser) mit einem Rohr der Rohrreihe 6 (bisher PN20) erreichen, obwohl die Gesamt-Wandstärke des Verbundrohres in bezug auf den nach DIN vorgegebenen Wert geringer ist, z.B. beim 32er Rohr um 1 mm. Dies ist bei dem erfindungsgemäßen Verbundrohr im wesentlichen dadurch möglich, daß die entsprechend starke, fest aufgebrachte Verstärkungsschicht im Verbundrohr mehr innen liegt. Die mit einem Haftvermittler kaschierte Verstärkungsschicht muß dabei im Überlappungsbereich fest und dicht mit dem Innenrohr und der Außenschicht verbunden sein, wobei die entsprechende Extruderdüse zum Aufbringen der Außenschicht dafür sorgt, daß vor allem die den Überlappungsbereich begrenzenden Ränder der Verstärkungsschicht mit Kunststoff abgedichtet werden. Die Festigkeit im Überlappungsbereich ist größer als die Zerreißfestigkeit der Verstärkungsschicht.

Weitere Vorteile sind der geringere Materialaufwand und die schnellere Verarbeitung bei der Produktion. Ferner ist kein schweißtiefenlanges Abschälen des Rohrendes mehr notwendig.

Die Erfindung wird nunmehr anhand der sie beispielsweise wiedergebenden Zeichnung beschrieben. Dabei zeigt
- Fig. 1: eine Seitenansicht eines zum Verschweißen vorbereiteten Endes eines Kunststoff-Metall-Verbundrohres mit einem die Perforation einer Verstärkungsschicht darstellenden Ausbruch,
- Fig. 2: einen Schnitt nach der Linie II-II in Fig. 1 und
- Fig. 3: halbaxial geschnitten eine polyfusionsgeschweißte Verbindung eines Verbundrohres mit einem Formstück, hier einer Endkappe.

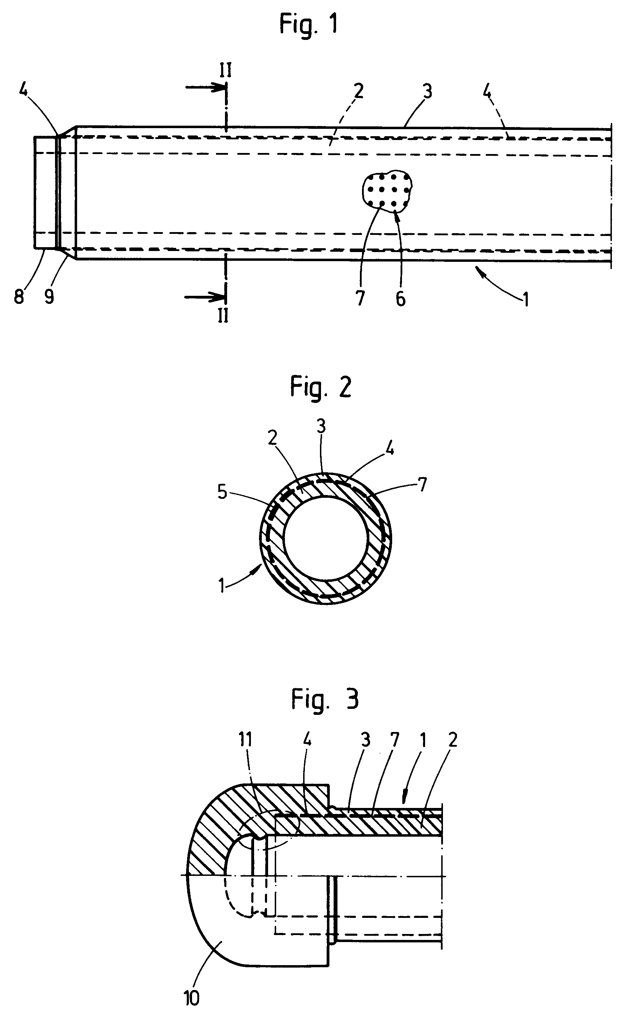

Das in den Fign. 1 und 2 dargestellte Kunststoff-Metall-Verbundrohr 1 besteht aus einem Kunststoff-Innenrohr 2, einer Kunststoff-Außenschicht 3 und einer zwischen Innenrohr 2 und Außenschicht 3 eingebetteten Verstärkungsschicht 4 (z.B. aus Aluminiumfolie), die in Längsrichtung des Verbundrohres 1 bei 5 überlappt ist. Von der Gesamt-Wandstärke des Verbundrohres 1 nimmt die Kunststoff-Außenschicht 3 etwa ein Viertel ein.

Die Verstärkungsschicht 4 weist eine Perforation 6 auf, wobei die Löcher 7 der Perforation 6 bezüglich Durchmesser und Form den Erfordernissen entsprechend angepaßt sind und zum Herstellen einer Verbindung zwischen Innenrohr 2 und Außenschicht 3 bei der Herstellung dienen.

Zum Polyfusions-Verschweißen des in Fig. 1 dargestellten Endes des Verbundrohres 1 wird dieses vom Ende her bis auf ein etwa 5 mm langes zylindrisches Reststück 8 mit einem Werkzeug heruntergeschält, das im Prinzip einem Bleistiftspitzer gleicht und ein Messer von einer solchen Form aufweist, daß die Verstärkungsschicht 4 mit weggenommen wird und vom zylindrischen Reststück 8 bis zum Außendurchmesser des Verbundrohres 1 eine kegelstumpfartige Übergangsfläche 9 gebildet wird.

Die Gesamt-Wandstärke des Verbundrohres 1 beträgt bei einem 32er Rohr (Außendurchmesser 32 mm) 5,4 mm, und der Innendurchmesser ist 21,2 mm. Im Vergleich dazu hat das 32er Rohr herkömmlicher Ausführung ohne Verstärkungsschicht eine Wandstärke von 6,4 mm und einen Innendurchmesser von 19,2 mm. Das Gewicht des Verbundrohres beträgt 0,444 kg/m im Vergleich zum Gewicht des herkömmlichen Kunststoffrohres von 0,499 kg/m. Beide Vergleichsausführungen entsprechen den Rohren der Reihe 7 mit PN 25.

Das zum Polyfusions-Verschweißen des Verbundrohres 1 mit einem Formteil oder Fitting (siehe Endkappe 10 in Fig. 3) benötigte Werkzeug (nicht dargestellt) besteht aus einer elektrisch beheizten Heizbuchse zum Erwärmen des Endes des Verbundrohres 1 und einem ebenfalls elektrisch beheizten Heizdorn zum Erwärmen des Formteils, z.B. der Endkappe 10. Heizbuchse und Heizdorn werden an ein elektrisches, thermostatisch gesteuertes Heizgerät (nicht dargestellt) angeschraubt.

Wie in Fig. 3 durch die ineinanderfließende Kunststoffschraffur in dem strichpunktiert gekennzeichneten Bereich 11 angedeutet, wird hier eine homogene Schweißverbindung geschaffen.

## Patentansprüche

1. Extrudiertes Kunststoff-Metall-Verbundrohr (1) für Installationen, das eine Verstärkungsschicht (4) zwischen einem Kunststoff-Innenrohr (2) und einer Kunststoff-Außenschicht (3) aufweist, dadurch gekennzeichnet, daß die Verstärkungsschicht (4) eine Perforation (6) aufweist.

2. Extrudiertes Kunststoff-Metall-Verbundrohr (1) nach Anspruch 1, dadurch gekennzeichnet, daß die Verstärkungsschicht (4) aus Aluminium besteht.

3. Extrudiertes Kunststoff-Metall-Verbundrohr (1) nach Anspruch 1 oder 2, dadurch gekennzeichnet, daß das Kunststoff-Innenrohr (2) und die Kunststoff-Außenschicht (3) aus dem gleichen Kunststoff, z.B. aus einem PP-Random-Copolymerisat nach Typ 3 DIN 8078, bestehen.

4. Extrudiertes Kunststoff-Metall-Verbundrohr (1) nach Anspruch 1 oder 2, dadurch gekennzeichnet, daß das Kunststoff-Innenrohr (2) und die Kunststoff-Außenschicht (3) aus verschiedenen Kunststoffen bestehen.

5. Extrudiertes Kunststoff-Metall-Verbundrohr (1) nach einem der Ansprüche 1 bis 4, dadurch gekennzeichnet, daß das Innenrohr (2), die Verstärkungsschicht (4) und die Außenschicht (3) eine Gesamt-Wandstärke haben, die geringer ist als die eines Rohres aus gleichem Kunststoff ohne Verstärkungsschicht, wobei ferner die Wandstärke der Kunststoff-Außenschicht (3) etwa ein Viertel der Gesamt-Wandstärke ausmacht.

6. Extrudiertes Kunststoff-Metall-Verbundrohr (1) nach einem der Ansprüche 1 bis 5, dadurch gekennzeichnet, daß die Verstärkungsschicht (4) beidseitig eine als Haftvermittler dienende Kunststoffkaschierung aufweist.

7. Extrudiertes Kunststoff-Metall-Verbundrohr (1) nach einem der Ansprüche 1 bis 6, dadurch gekennzeichnet, daß die Verstärkungsschicht (4) beidseitig eine als Haftvermittler dienende aufgerauhte Oberfläche aufweist.
